(19)

Europäisches
Patentamt
European
Patent Office
Office européen
des brevets

(11) **EP 4 175 907 B1**

(12) **EUROPEAN PATENT SPECIFICATION**

(45) Date of publication and mention
of the grant of the patent:
**24.04.2024 Bulletin 2024/17**

(21) Application number: **21743220.2**

(22) Date of filing: **02.07.2021**

(51) International Patent Classification (IPC):
**B66C 13/46** [(2006.01)]     **B66C 19/00** [(2006.01)]

(52) Cooperative Patent Classification (CPC):
**B66C 13/46; B66C 19/007**

(86) International application number:
**PCT/FI2021/050517**

(87) International publication number:
**WO 2022/008793 (13.01.2022 Gazette 2022/02)**

(54) **METHOD AND APPARATUS FOR RELATIVE POSITIONING OF A SPREADER**

VERFAHREN UND VORRICHTUNG ZUR RELATIVEN POSITIONIERUNG EINES STREUERS

PROCÉDÉ ET APPAREIL DE POSITIONNEMENT RELATIF D'UN PALONNIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.07.2020 FI 20205729**

(43) Date of publication of application:
**10.05.2023 Bulletin 2023/19**

(73) Proprietor: **Cargotec Finland Oy
33710 Tampere (FI)**

(72) Inventors:
• **YANG, Wenyan
33540 Tampere (FI)**
• **AREF, Mohammad
33610 Tampere (FI)**
• **VIHONEN, Juho
36240 Kangasala (FI)**
• **LUKKALA, Jyri
33730 Tampere (FI)**
• **ASIKAINEN, Mikko
36100 Kangasala (FI)**
• **SANTAHUHTA, Hannu
35100 Orivesi (FI)**

(74) Representative: **Laine IP Oy
Porkkalankatu 24
00180 Helsinki (FI)**

(56) References cited:
**EP-A1- 2 796 402     WO-A1-2014/169096**

EP 4 175 907 B1

**Description**

FIELD

Various example embodiments relate to positioning of a spreader.

BACKGROUND

Heavy load transportation industries involve handling heavy loads, e.g. when loading and unloading vehicles e.g. in harbours and on ships. For example, in container logistics, a spreader is used in crane systems for lifting a container. Spreaders are often controlled by a trained human operator who requires extensive training to become familiar with the spreader control system. This kind of spreader control system is prone to human errors. EP 2 796 402 A1 discloses the preamble of claims 1, 12 and 22.

SUMMARY

According to some aspects, there is provided the subject-matter of the independent claims. Some example embodiments are defined in the dependent claims. The scope of protection sought for various example embodiments is set out by the independent claims. The example embodiments and features, if any, described in this specification that do not fall under the scope of the independent claims are to be interpreted as examples useful for understanding various example embodiments.

According to a first aspect, there is provided an apparatus comprising means for: receiving a first image of a first feature of a load; receiving a second image of a second feature of the load; determining image plane coordinates of the features of the load based on the first image and the second image; determining one or more action candidates based on the image plane coordinates; evaluating the one or more action candidates using an intermediate medium embodying historical experience information within a finite time horizon; choosing a control action based on the evaluation, wherein the control action causes a spreader to move with respect to the load.

According to an embodiment, the apparatus comprises means for determining a pairwise operation between the image plane coordinates of the first feature and the image plane coordinates of the second feature; determining the one or more action candidates based on the pairwise operation; determining the control action based on costs and/or rewards based on the action candidates.

According to an embodiment, the reward achieves its highest value when the spreader substantially aligns with the load or achieves substantial alignment in the finite time horizon in the future.

According to an embodiment, the cost is proportional to force or energy or pressure or voltage or current or placement or placement consumption based on the action candidates and their effect in the spreader motion at the current moment or in the finite time horizon in the future; and/or reflects risk of losing features in a camera's field of view at the current moment or in the finite time horizon in the future.

According to an embodiment, the apparatus comprises means for transmitting the control action directly or indirectly to one or more actuators for moving the spreader with respect to the load.

According to an embodiment, the first image is received from a first camera located on a first corner of a spreader and the second image is received from a second camera located on a second corner of the spreader, wherein the first corner and the second corner are different corners, and wherein the first feature of the load is a first corner of a container and the second feature of the load is a second corner of the container, wherein the first corner of the spreader and the first corner of the container are corresponding corners and the second corner of the spreader and the second corner of the container are corresponding corners.

According to an embodiment, the means comprises at least one processor; and at least one memory including computer program code, the at least one memory and the computer program code configured to, with the at least one processor, cause the performance of the apparatus.

According to a second aspect, there is provided a method comprising: receiving a first image of a first feature of a load; receiving a second image of a second feature of the load; determining image plane coordinates of the features of the load based on the first image and the second image; determining one or more action candidates based on the image plane coordinates; evaluating the one or more action candidates using an intermediate medium embodying historical experience information within a finite time horizon; choosing a control action based on the evaluation, wherein the control action causes a spreader to move with respect to the load.

According to an embodiment, the method comprises determining a pairwise operation between the image plane coordinates of the first feature and the image plane coordinates of the second feature; determining the one or more action candidates based on the pairwise operation; determining the control action based on costs and/or rewards based on the action candidates.

According to an embodiment, the reward achieves its highest value when the spreader substantially aligns with the load or achieves substantial alignment in the finite time horizon in the future.

According to an embodiment, the cost is proportional to force or energy or pressure or voltage or current or placement or placement consumption based on the action candidates and their effect in the spreader motion at the current moment or in the finite time horizon in the future; and/or reflects risk of losing features in a camera's field of view at the current moment or in the finite time horizon in the future.

According to an embodiment, the method comprises transmitting the control action directly or indirectly to one or more actuators for moving the spreader with respect to the load.

According to an embodiment, the first image is received from a first camera located on a first corner of a spreader and the second image is received from a second camera located on a second corner of the spreader, wherein the first corner and the second corner are different corners, and wherein the first feature of the load is a first corner of a container and the second feature of the load is a second corner of the container, wherein the first corner of the spreader and the first corner of the container are corresponding corners and the second corner of the spreader and the second corner of the container are corresponding corners.

According to a third aspect, there is provided a computer readable medium comprising program instructions that, when executed by at least one processor, cause an apparatus to perform at least: receiving a first image of a first feature of a load; receiving a second image of a second feature of the load; determining image plane coordinates of the features of the load based on the first image and the second image; determining one or more action candidates based on the image plane coordinates; evaluating the one or more action candidates using an intermediate medium embodying historical experience information within a finite time horizon; choosing a control action based on the evaluation, wherein the control action causes a spreader to move with respect to the load.

According to further embodiments, the computer readable medium comprises program instruction that, when executed by at least one processor, cause an apparatus to perform at least the method of any of the embodiments of the second aspect.

According to a further non-claimed aspect, there is provided a computer program configured to cause a method in accordance with the second aspect and any of the embodiments of the second aspect to be performed.

BRIEF DESCRIPTION OF THE DRAWINGS

Fig. 1 shows, by way of example, a spreader alignment task;
Fig. 2 shows, by way of example, motion control action visualization;
Fig. 3 shows, by way of example, a flowchart of a method for spreader alignment;
Fig. 4 shows, by way of example, a spreader and a container and image plane based states design;
Fig. 5 shows, by way of example, image plane based states design;
Fig. 6 shows, by way of example, a system architecture;
Fig. 7 shows, by way of example, a block diagram of an apparatus;
Fig. 8 shows, by way of example, a plot of error measurements of alignment trials;
Fig. 9 shows, by way of example, a plot of error measurements of alignment trials;
Fig. 10 shows, by way of example, a plot of error measurements of alignment trials;

DETAILED DESCRIPTION

Load handling arrangements are used e.g. in ports, terminals, ships, distribution centres and various industries. The following examples are described in the context of crane systems, but the method disclosed herein may be used in any environment where loads are lifted and there is a need for accurate positioning of a spreader used for handling a load, e.g. a container. Handling of the load comprises e.g. lifting, moving, and placement of the load. The crane systems may be considered as any system or equipment with a spreader.

In container logistics, a spreader is used in crane systems for lifting a container. The spreader has a twist locking mechanism at each corner which is accurately positioned to the corner castings of container. In order to lift the container, the spreader needs to be aligned with the container. The process of lifting the container may be, for example, divided into three phases: search phase, alignment phase, landing phase.

In the search phase, the spreader may be moved above the container, to a so called clearance region. A rough estimate of the container's position may be received e.g. from a terminal operating system. Moving the spreader above the container may be performed by using motion commands.

In the alignment phase, the spreader's position, e.g. orientation and/or translation, may be fine-tuned with respect to the container's position or a place available for container placement. This fine-tuning movement may be performed by using motion control commands to run the actuators that are capable of running the commands.

In the landing phase, the spreader may be landed to a desired position determined in the alignment phase. If the spreader's twist locks fit in and lock to the corner castings of the container, the container can be lifted.

There is provided a controller for the alignment phase so that the spreader's position is adjusted so that it will land on the load, e.g. a container, with high precision.

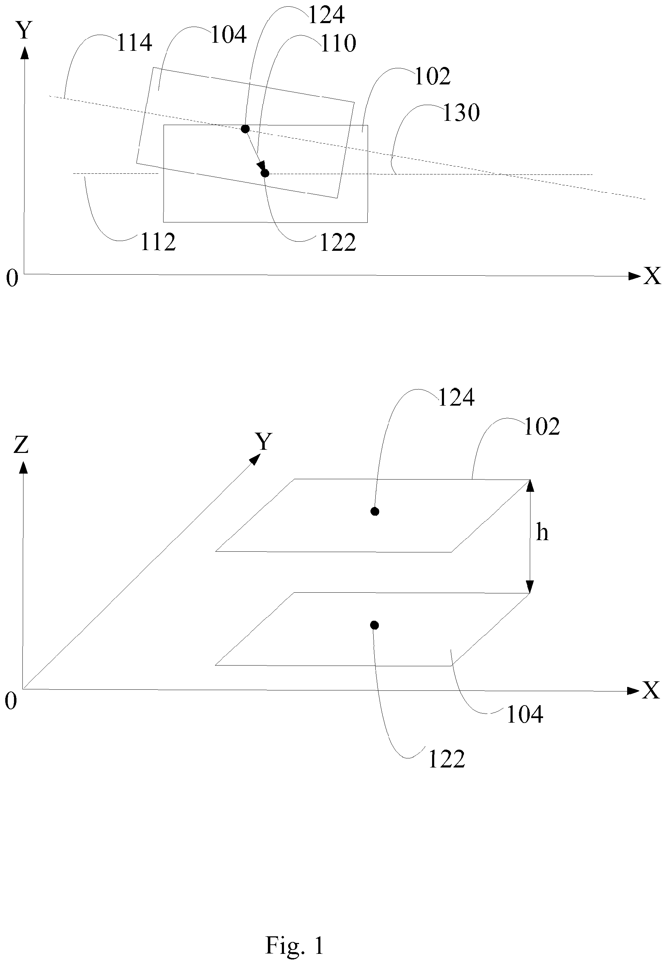

Fig. 1 shows, by way of example, a spreader alignment task. Upper figure of Fig. 1 shows a top view of a situation, wherein a spreader 102 is not aligned with a container 104. The x-axis and the y-axis are the axes of an imaginary common coordinate frame where the spreader 102 and the container 104 may be represented.

The center offset 110 $\vec{V_{centre}}$ on the x-y plane between the spreader 102 and the container 104 is $(d_x, d_y)$. The height between the spreader 102 and the container 104 is $h$. The line 112 has been drawn through a center point 122 of the spreader 102. The line 114 has been drawn through a center point 124 of the container 104. An angle 130 between the lines 112 and 114 is $\gamma$ representing the skew angle between spreader and container. In this spreader alignment phase, the goal of the policy generated by controller is to minimize $\vec{V_{centre}}$ and $\gamma$, so that $\vec{V_{centre}} = (0,0)$ and $\gamma = 0$.

Lower figure of Fig. 1 shows a view in x-y-z coordinate system, wherein the spreader is aligned with the container. For example, the center points of the spreader and the container, i.e. the point 124 and the point 122, are aligned such that $\vec{V_{centre}} = (0,0)$ and $\gamma = 0$.

The controller may be represented as:

$$a = \pi(s)$$

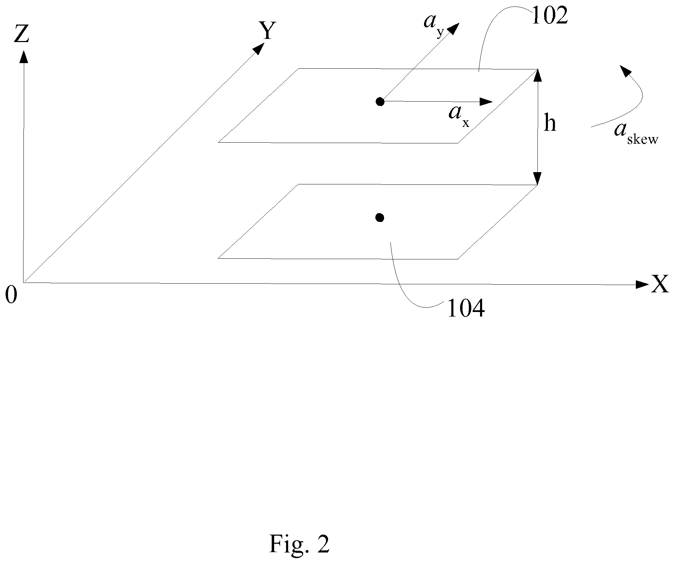

where $a = [a_x, a_y, a_{skew}]$ is a three dimensional vector representing the motion control actions (as is shown in Fig. 2), s is spreader observed state representation, and $\pi$ represents the control policy. The observed state may be computed on the spreader coordinates and container coordinates expressed in a common coordinate system or image coordinate system. The common coordinate based state is used when the coordinates are obtained from the sensors, i.e. the coordinates of the container and the spreader in the common coordinate system are accurately measured. Below, the state design based on image coordinate system is described.

Fig. 2 shows, by way of example, motion control action visualization. Action $a_x$ represents movement of the spreader along x-axis, action $a_y$ represents movement of the spreader along y-axis, and action $a_{skew}$ represents rotating movement of the spreader on the x-y plane.

There is provided a method for spreader alignment. The method enables choosing the motion control action(s) so that spreader alignment with high accuracy is achieved.

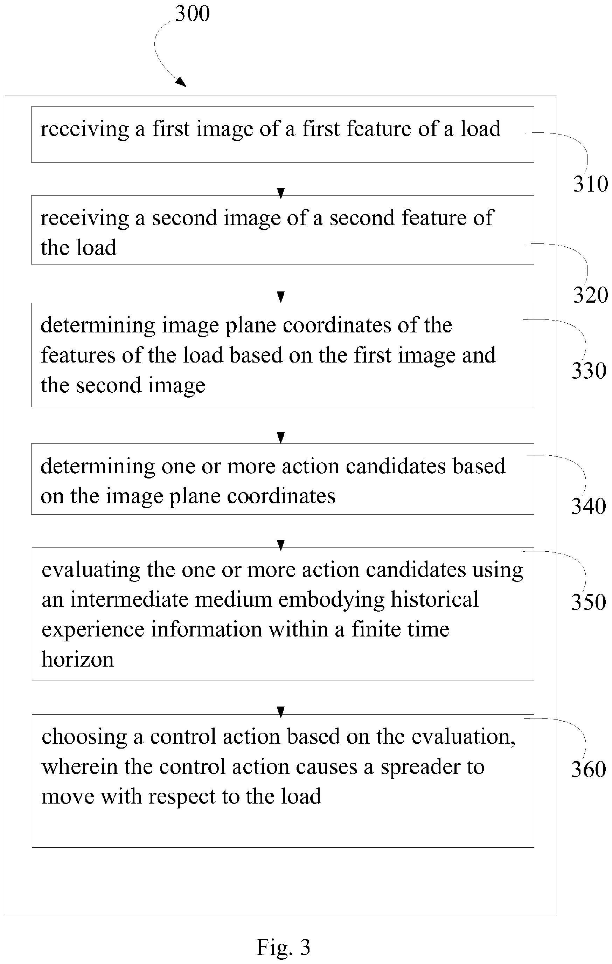

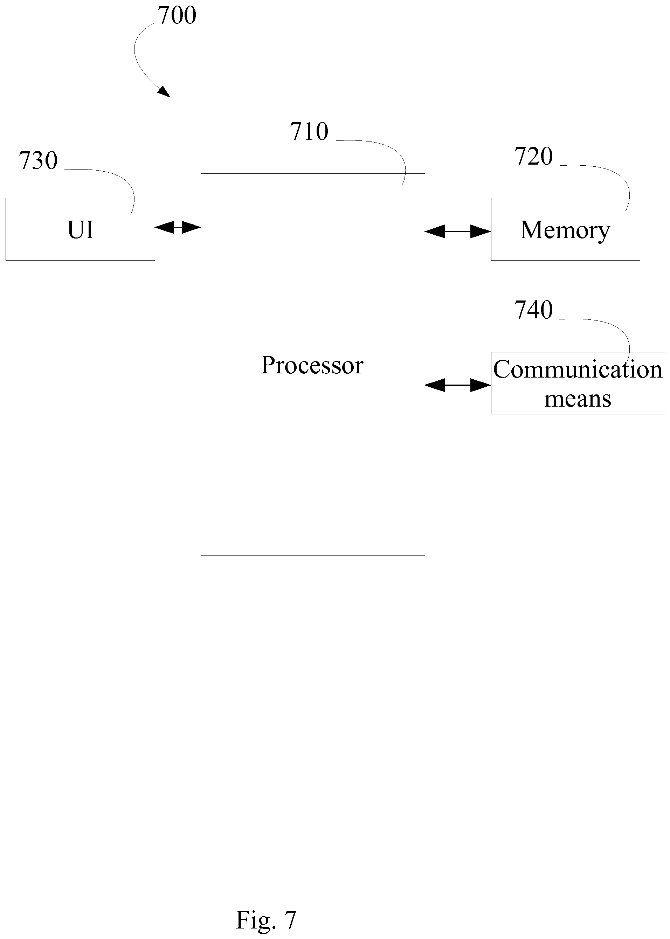

Fig. 3 shows, by way of example, a flowchart of a method for spreader alignment. The method may be performed e.g. by the apparatus of Fig. 7. The method 300 comprises receiving 310 a first image of a first feature of a load. The method 300 comprises receiving 320 a second image of a second feature of the load. The method 300 comprises determining 330 image plane coordinates of the features of the load based on the first image and the second image. The method 300 comprises determining 340 one or more action candidates based on the image plane coordinates. The method 300 comprises evaluating 350 the one or more action candidates using an intermediate medium embodying historical experience information within a finite time horizon. The method 300 comprises choosing 360 a control action based on the evaluation, wherein the control action causes a spreader to move with respect to the load.

The method disclosed herein provides determination of control actions based on image information from spreader sensors, e.g. based on spreader camera stream(s). Other sensor information is not necessarily needed. However, various sensor data may be used, e.g. to create the images, as will be described below. The method disclosed herein enables accurate positioning of the spreader for lifting a load, e.g. a container, without human operation. The method is robust to changes in the cameras and their mutual alignment and singularities in the view of aligned cameras. Moreover, this method relies on a multi-point evaluation of images, which may significantly increase sensitivity to measurement noise and accuracy of prior information, when compared e.g. to using single-point evaluation. The method is independent of time and based on the system geometry. Time independent geometrical operations make the system well applicable to variable latency control. This is beneficial when compared to e.g. pure trajectory control, which enforces high synchronous actuator control and is time critical.

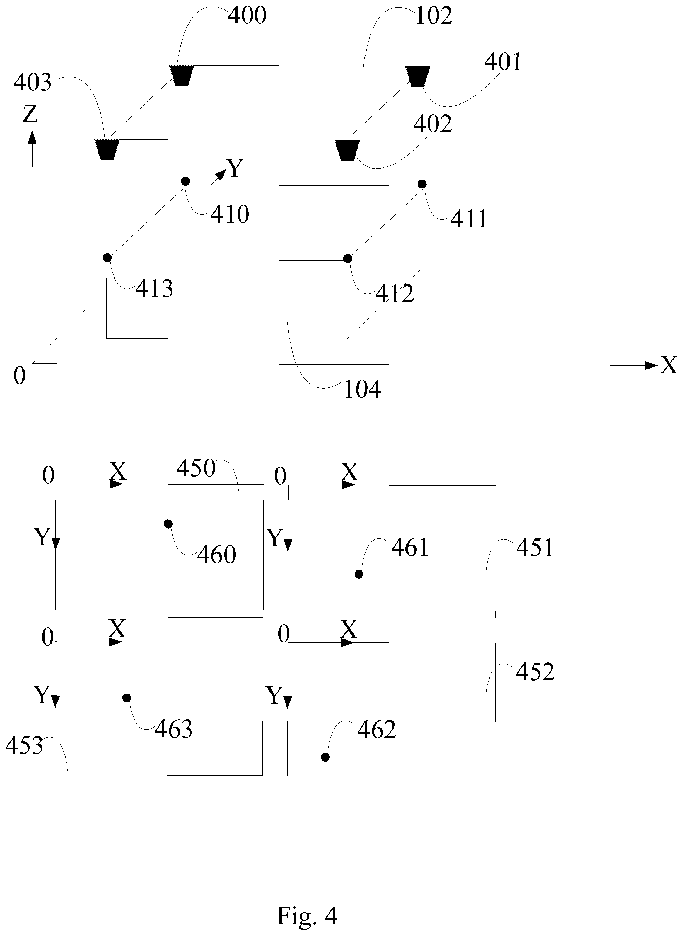

Fig. 4 shows, by way of example, a spreader 102 and a container 104 and image plane based states design. Cameras 400, 401, 402, 403 are attached to the spreader. For example, cameras may be located on corners of the spreader, e.g. one camera on each four corners of the spreader. However, the location of the camera does not need to be exactly on the corner, but approximately on the corner. The choice of number of cameras and their viewpoints may be dependent on the field of view and container visibility. The location and orientation of the cameras may be such that they are directed downwards in order to capture the space below the spreader. Locations of the cameras are known in common coordinates.

For example two cameras, e.g. a first camera and a second camera, may be attached to the spreader. If two cameras are used, the cameras may be wide-angle cameras. The first camera and the second camera are attached to different corners of the spreader. For example, the first camera may be located on a first corner of a spreader, and a second camera may be located on a second corner of the spreader. The first corner and the second corner are different corners. The first corner may be opposite to the second corner such that the first corner and the second corner may be connected with a diagonal line passing through the center point of the spreader. Alternatively, the first corner and the second corner may be adjacent corners.

As a further example, a bird eye camera may be used.

Cameras may be video cameras. Cameras comprise digital image sensor(s), e.g. charge-coupled device (CCD) and/or active-pixel sensor(s), e.g. complementary metal-oxide-semiconductor (CMOS) sensor(s). Images are received from one or more cameras. For example, a first image may be received from the first camera, and a second image may be received from the second camera. Alternatively, images may be received from three or four cameras, or from a bird-eye camera. In case of the bird-eye camera, the first image and the second image are e.g. cropped from a wider image. The first image comprises, or shows, an image of a first feature of the container. The first feature may be a first corner of the container. Alternatively, the first feature may be a twist-lock hole, a marking, a landmark or any feature that may be detected from the image and which may be associated to the first corner of the container. In some cases, features which may geometrically define a rectangle may be an alternative for the corners. The first corner of the container corresponds to the first corner of the spreader. Corresponds here means, for example, that the camera 400 tries to capture a corner 410, or some other feature, of the container. For example, the corner 410 corresponds to the corner where the camera 400 is located; the corner 411 corresponds to the corner where the camera 401 is located; the corner 412 corresponds to the corner where the camera 402 is located; the corner 413 corresponds to the corner where camera 403 is located.

Instead of receiving the images from the camera(s), the images may be received from a memory, where they have been stored. In some cases, images comprising the features, e.g. the corners, may be created based on range sensor data, or distance sensor data. For example, time-of-flight cameras or lidars may be used to feature detection, e.g. corner detection.

The second image comprises, or shows, an image of a second feature of the container. The second feature may be a second corner of the container. Alternatively, the second feature may be a twist-lock hole, a marking, a landmark, or any feature that may be detected from the image and which may be associated to the second corner of the container. The second corner of the container corresponds to the second corner of the spreader. The features, e.g. corners, may be detected from the images via image processing techniques for object detection. Denote the corner detection function as F. For example, the corners may be detected using edge detection methods, e.g. edge approaching (EA) detection methods, and hue, saturation, value (HSV) algorithm. The HSV algorithm may filter and segment the container based on color and the EA method may calculate the container's rotation angle. Neural network(s) (NN(s)) provide a robust approach for object detection. For example, deep learning may be used to conduct feature extraction, e.g. corner casting detection. The received images streamed from the cameras may be fed into neural network to detect the features, e.g. container's corners. The NN may be composed of e.g. two modules: convolutional neural network (CNN) part and long-short-term-memory (LSTM) module. The received images may be combined and sent to the CNN to extract high-level features while LSTM may recurrently predict the corners of the container.

Image plane coordinates of the features of the container may be determined based on the received images. For example, the image plane coordinates of the corners of the container may be determined based on the first image and the second image. The image plane based states are based on the container's corners projected from common coordinate system to the image planes. By determining or measuring the feature locations in the image plane, measurement errors related to physical coordinate measurements by sensors are avoided. Use of physical coordinate measurements makes system sensitive to any changes in configuration and it requires very accurate knowledge in dimensions of the system. In addition, there is no need for camera calibration such as in model-based approaches, wherein a small error in camera's extrinsic and/or intrinsic parameters estimation may end up with large physical estimation error which is proportional to camera's focal length and spreader's size. When a plurality of cameras are used in model-based approaches, the error accumulates. As disclosed herein, the mapping from image coordinates, not the physical coordinates, to target pose is directly found, need for the camera calibration is avoided.

In this example, let us consider four image planes 450, 451, 452, 453. There may be four cameras 400, 401, 402, 403 located on the spreader's corners. The cameras 400, 401, 402, 403 may be denoted as $cam_0$, $cam_1$, $cam_2$, $cam_3$, respectively. The image 450 may be received from the camera 400, the image 451 may be received from the camera 401, the image 452 may be received from the camera 402, and the image 453 may be received from the camera 403. Let us denote four corners 410, 411, 412, 413 of the container in common coordinate system as points $p_{c0}$, $p_{c1}$,

$p_{c2}$ and $p_{c3}$, respectively. Let us denote the corners (or other features) 460, 461, 462, 463 of the container on the projected camera image planes 450, 451, 452, 453 as points $p_0$, $p_1$, $p_2$ and $p_3$, respectively.

Let us introduce the notation $X_j$ for the world point represented by the homogenous 4-vector $(x_{offsetc}, y_{offset}, z_{offset}, 1)$ on the relative coordinates. Let us denote camera's position in common coordinate system as $p_{cam} = (x_{camj}, y_{camj}, z_{camj})$ and container's corner position in common coordinate system as $p_c = (x_{cj}, y_{cj}, z_{cj})$. Then:

$$X_j = (x_{c_j} - x_{cam_j}, y_{c_j} - y_{cam_j}, z_{c_j} - z_{cam_j}, 1) =$$

$$(x_{offsetc}, y_{offset}, z_{offset}, 1)$$

For each corner $p_{j,j=0,1,2,3}$ on each image plane, its projection is based on the projection equation:

$$p_j = PX_j^T$$

where P is the projection matrix:

$$P = K[R|T]$$

R and T are the camera's extrinsic parameters, which relate the image frame's orientation and position to the common coordinate system. K is the finite projective camera's intrinsic parameter matrix:

$$K = \begin{bmatrix} \alpha_x & s & x_0 \\ 0 & \alpha_y & y_0 \\ 0 & 0 & 1 \end{bmatrix}$$

If the number of pixels per unit distance in image coordinates are $m_x$ and $m_y$ in the x and y directions, and the focal length is denoted as $f$, then it applies that

$$\alpha_x = f \cdot m_x , \alpha_y = f \cdot m_y,$$

wherein $\alpha_x$ and $\alpha_y$ represent the focal length of the camera in terms of pixel dimensions in the x and y direction respectively. Parameter s is referred to as the skew parameter. The skew parameter will be zero for most normal cameras.

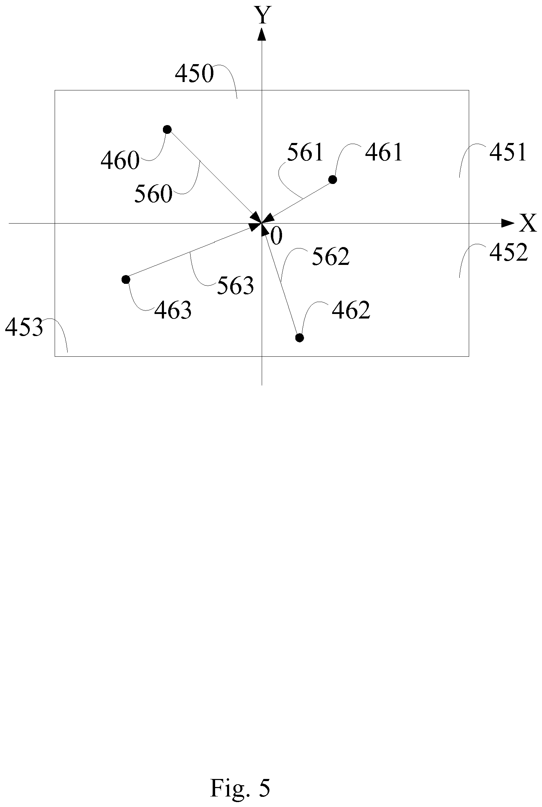

Fig. 5 shows, by way of example, image plane based states design. The states may be defined on a new cartesian coordinate system which is combined of the four image planes. The vector 560 from $p_0$ 460 to the origo 0 is $\overrightarrow{V_{p_0 o}}$. The vector 561 from $p_1$ 461 to origo is $\overrightarrow{V_{p_1 o}}$. The vector 562 from $p_2$ 462 to origo is $\overrightarrow{V_{p_2 o}}$. The vector 563 from $p_3$ 463 to origo is $\overrightarrow{V_{p_3 o}}$.

An angle between the vectors 560 and 562 may be defined as

$$\theta = angle\left(\overrightarrow{V_{p_0 o}}, \overrightarrow{V_{p_2 o}}\right), \theta \in [-\pi, \pi].$$

An angle between the vectors 561 and 563 may be defined as

$$\alpha = angle\left(\overrightarrow{V_{p_1 o}}, \overrightarrow{V_{p_3 o}}\right), \alpha \in [-\pi, \pi].$$

Further, it may be defined that $\theta' = \pi - \theta$, $\theta' \in [-\pi, \pi]$ and $\alpha' = \pi - \alpha$, $\alpha' \in [-\pi, \pi]$.

The states may be defined by four vectors and two angles between the vectors. The states may be defined as follows:

$$state = [\vec{V_{p_0 o}}, \vec{V_{p_1 o}}, \vec{V_{p_2 o}}, \vec{V_{p_3 o}}, \theta', \alpha'] =$$

$$[x'_{p_0}, y'_{p_0}, x'_{p_1}, y'_{p_1}, x'_{p_2}, y'_{p_2}, x'_{p_3}, y'_{p_3}, \theta', \alpha']$$

In case of two images, the states may be defined by two vectors and an angle between the two vectors. As another example, the states may be the images themselves.

Another option is to use the symmetric feature for matching the position between the spreader and the container. In other words, a pairwise operation may be determined between the image plane coordinates of the first corner (or feature) and the image plane coordinates of the second corner (feature). The states $S_{IPS}$ may be defined based on image plane symmetric coordinates.

In pairwise operation, images are compared with images, or image features are compared with image features without mapping them into physical distances, e.g. metric distances. This enables minimizing effects of calibration errors, camera miss alignments, and inclined containers or floors on crane operations, for example. As long as cameras are nearly similar to each other, role of camera optics calibration or intrinsic camera parameters is minimal. When using pairwise operation, decisions are made based on the current view and what will happen to the compared pairs in the near future. Thus, the system updates its expectations from the near future based on the differences in the views of the cameras, without relying on past points and their positions in the physical system. Features that are compared with each other may be planar, simple features, such as mathematical point at a corner of a container, without requiring a sense of size or need for prior template view of an object. This simplifies the image processing, since complicated object recognition and/or object pose estimation is/are not needed.

A pairwise operator is an operator which has a monotonic or piecewise monotonic behaviour correlated with either decreasing or increasing errors in alignment of the spreader and the container or the available placement for the container. An example of a pairwise operator is the norm of dot or cross multiplication of error vectors in any pair of camera images. Another example of a pairwise operator is the norm of dot or cross multiplication of feature position vectors in any pair of camera images. In other words, for any chosen pair of camera images, the system compares features on the camera images either with respect to their error or to their position.

Pairwise operation, e.g. pairwise symmetry operation, is beneficial for a learning algorithm such as reinforcement learning (RL) algorithm. By defining the symmetrical or pairwise nature to the artificial intelligence (AI) controller, it is able to learn a usable control policy without any ground truth knowledge from uncalibrated sensors or cameras or from accurate physical coordinate measurements or human expert guidance. A spreader has similar rectangular-like geometry as a container. Therefore, when there is no or minimal offset in x, y, and skew, the change in the views becomes comparable to each other or from one camera to another. The pairwise operation may be generalized to rectangle shaped geometries that exhibit any symmetrical visual properties.

$f =$ Flip(p) represents the symmetric operations, e.g. $Flip_{tl \to br}(p_0)$ means flipping point $p_0$ 460 from top left (tl) to bottom right (br). Top left (tl) refers to image 450, top right (tr) refers to image 451, bottom right (br) refers to image 452, and bottom left (bl) refers to image 453.

$$p_2 - Flip_{tl \to br}(p_0) = (d_{x_{tl \to br}}, d_{y_{tl \to br}})$$

$$p_3 - Flip_{tr \to bl}(p_1) = (d_{x_{tr \to bl}}, d_{y_{tr \to bl}})$$

$$p_1 - Flip_{tl \to br}(p_0) = (d_{x_{tl \to tr}}, d_{y_{tl \to tr}})$$

$$p_3 - Flip_{br \to bl}(p_2) = (d_{x_{br \to bl}}, d_{y_{br \to bl}})$$

$$p_2 - Flip_{tr \to br}(p_1) = (d_{x_{tr \to br}}, d_{y_{tr \to br}})$$

$$p_3 - Flip_{tl \to bl}(p_0) = (d_{x_{tl \to bl}}, d_{y_{tl \to bl}})$$

The symmetric feature may be used to match the position between the spreader and the container. When the spreader is aligned with the container, the corner's coordinates on the image planes have the following features:

$$p_2 - Flip_{tl \to br}(p_0) = (x_{offset_{tl \to br}}, y_{offset_{tl \to br}})$$

$$p_3 - Flip_{tr \to bl}(p_1) = (x_{offset_{tr \to bl}}, y_{offset_{tr \to bl}})$$

$$p_1 - Flip_{tl \to br}(p_0) = (x_{offset_{tl \to br}}, y_{offset_{tl \to br}})$$

$$p_3 - Flip_{br \to bl}(p_2) = (x_{offset_{br \to bl}}, y_{offset_{br \to bl}})$$

$$p_2 - Flip_{tr \to br}(p_1) = (x_{offset_{tr \to br}}, y_{offset_{tr \to br}})$$

$$p_3 - Flip_{tl \to bl}(p_0) = (x_{offset_{tl \to bl}}, y_{offset_{tl \to bl}})$$

so that

$$target_{symmetric} = \{x_{offset_{tl \to br}}, y_{offset_{tl \to br}}, \ldots, x_{offset_{tl \to bl}}, y_{offset_{tl \to bl}}\}$$

refers to a target offset when the spreader and container are aligned. The $target_{symmetric}$ can be non-zero depending on the cameras' poses and image plane definitions.

The states in this case may be defined as:

$$state_{symmetric} = [d_{x_{tl \to br}}, d_{y_{tl \to br}}, \ldots, d_{x_{tl \to bl}}, d_{y_{tl \to bl}}]$$

Action candidates, e.g. motion control action candidates, may be determined. The determination may be based on the determined image plane coordinates of the features of the container on the images, e.g. the corner of the container on the first image and the corner of the container on the second image, with respect to each other. The determination may be, alternatively or in addition, based on historical information derived from the images.

Action candidates determine different control commands for moving the spreader. As described above for the controller, the control command may be represented as a vector defining movement to x- and y-directions, and rotation, i.e. skew. The actions or control commands may be determined e.g. via energy, force, power, voltage, current, and/or displacement. For example, the system needs energy to move the spreader, and the energy may be transmitted in the system e.g. via pressure changes, electricity, etc. Actions may be e.g. discrete or continuous. A reinforcement learning (RL) algorithm may be used to learn the spreader-alignment task. Reinforcement learning (RL) is a type of a machine learning technique that enables an agent to learn in an interactive environment using feedback from its own actions and experiences. In RL, in a certain state of the environment, an agent or an optimization algorithm, performs an action according to its policy e.g. a neural network, that changes the environment state and receives a new state and reward for the action. The agent's policy is then updated based on the reward of the state-action pair. RL learns by self-exploration which is or may be conducted without human interference.

For discrete actions, there is a set of action candidates, wherein the actions have a fixed value. For example, the action candidate may be defined as $a = [a_x \in \{-1,1\}, a_y \in \{-1,1\}, a_{skew} \in \{-1,1\}]$, wherein -1 (negative) and 1 (positive) refer to different directions. For example, -1 may refer to a displacement to direction of negative x-axis or y-axis or counterclockwise rotation, and +1 may refer to a displacement to direction of positive x-axis or y-axis or clockwise rotation. A policy in this case may be learned to generate the possibilities of which action should be taken based on the current state. The action may be given as $\pi(a|s)$, wherein $a$ is the action, $s$ is the state and $\pi$ is the policy. In at least some embodiments, the action candidates are sample time independent which is beneficial for a system with variable latency. Sample time or cycle time is the rate at which a discrete system samples its inputs or states.

The outcome of the policy indicates probabilities of the different actions, e.g. [$a_{x\_positive}$ = 0.5, $a_{y\_positive}$ = 0.35, $a_{skew\_positive}$ = 0.8, $a_{x\_negative}$ = 0.35, $a_{y\_negative}$ = 0.35, $a_{skew\_negative}$ = 0.18], and one action $a_{skew\_positive}$ with the highest probability may be chosen. RL algorithm for discrete actions may be e.g. deep Q-learning network (DQN).

For continuous actions, there is a set of action candidates, wherein the value for the actions is not fixed. For example, the action candidate may be defined as $a = [a_x \in [-1,1], a_y \in [-1,1], a_{skew} \in [-1,1]]$. A policy in this case may be a deterministic policy, which is learned to give a specific value for each action. The action may be given as $a = \pi(s)$.

The outcome of the policy may be e.g. [$a_x$ = -0.3, $a_y$ = 0.8, $a_{skew}$ = 1], and all the actions may be conducted in one step. RL algorithm for continuous actions may be e.g. deep deterministic policy gradient (DDPG).

Action candidates may be evaluated using an intermediate medium embodying historical experience information within a finite time horizon. For example, the action candidates may be evaluated using the RL algorithm. In RL, the RL agent's goal is to maximize a cumulative reward. In episodic case, this reward may be expressed as a summation of all received reward signals during one episode. The term episode refers to a sequence of actions for positioning the spreader over the container for hoisting down.

Reward may be defined as a mathematical operation based on, e.g., image plane coordinates, or image plane symmetric coordinates.

Common coordinates based state may be used when the coordinates may be obtained from the sensors, i.e. when the coordinates of the container and the spreader in the common coordinate system are accurately measured.

The environment may respond by transitioning to another state and generating a reward signal. The reward signal may be considered to be a ground-truth estimation of agent's performance. The reward signal may be calculated based on the reward function, which may be introduced as stochastic and dependent on action $a$:

*reward* ($r_t | s_t$) is the reward function that calculate instantaneous reward $r_t$ based on current state $s_t$ at time instant $t$.

The process continues repeatedly with agent making choices of actions based on observations and environment responding with next states and reward signals. The goal of agent is to maximize the cumulative reward R:

$$R := \sum_{t=1}^{T} r_t$$ is the sum of instant reward $r_t$ of one trajectory.

The reward function may be designed to guide the RL agent to optimize its policy. For example, the reward function based on a common coordinate frame may be defined as

$$reward_{common} = -1 * ||[\vec{V_{centre}}, \gamma]||_2 = -1 * ||[d_x, d_y, \gamma]||_2$$

As is shown in the reward function, the reward $reward_{common}$ is increasing when spreader is reaching the target position. In the target position it holds that $d_x$ = 0, $d_y$ = 0, and $\gamma$ = 0. (see Fig. 1). The reward achieves its highest value when the spreader substantially aligns with the load, e.g. when the spreader is perfectly aligned with the load, e.g. the container. Alternatively, the reward achieves its highest value when the spreader achieves substantial alignment in the finite time horizon in the future. This may mean that the alignment is within a pre-defined threshold values. A threshold value may be pre-determined for substantial alignment, or perfect alignment.

The reward based on image coordinates is defined based on the symmetry of the corners, or other pre-determined features, on the received images. The reward may be the L2 norm of the states.

$$reward_{symmetric} = -1 * \left\|state_{symmetric} - target_{symmetric}\right\|_2$$

If the reward is greater than a pre-determined range, then the task is successful.

The primary goal is to maximize the reward. In case of possibility, it may happen together with minimizing a cost. The cost may be proportional to force or energy or pressure or voltage or current or placement or placement consumption based on the action candidates and their effect in the spreader motion at the current moment or in the finite time horizon in the future. The cost may reflect risk of losing features in the camera's field of view at the current moment or in the finite time horizon in the future.

The action candidate that leads to the task being successful may be selected as a control action. The control action causes the spreader to move with respect to the container.

The Deep Deterministic Policy Gradients (DDPG) is an off-policy model-free RL algorithm for continuous control.

The actor-critic structure of DDPG makes it utilize the advantages of policy gradient methods (actor) and d value approximation methods (critic). For one trajectory, denote the state $s$ and action $a$ at time step $t$ as $s_t$ and $a_t$. The action-value function approximator, i.e. the critic $Q(s_t, a_t)$, represents the expected cumulative return after action $a_t$ is conducted based on $s_t$. $Q(s_t, a_t)$ is optimized by minimizing the Bellman error so that

$$Q(s_t, a_t) = \mathbb{E}_{r_t, s_{t+1} \sim \mathbb{E}}[r(s_t, a_t) + \gamma \mathbb{E}_{a_t}[Q(s_{t+1}, a_{t+1})]],$$

where $\mathbb{E}$ is the expectation value of its argument. The action policy part (actor) is a function $a_t = \pi(s_t)$, and is optimized by directly maximizing the estimated actor's action-value function with respect to the parameters of the policy. Concretely, DDPG maintains an actor function $\pi(s)$ with parameters $\theta_\pi$, a critic function $Q(s, a)$ with parameters $\theta_Q$, and an experience buffer $B$ as a set of tuples $t_i = (s_t, a_t, r, s_{t+1})$ for each transition after action is conducted. The tuples are time independent.

DDPG alternates between running the policy to collect trajectories and updating the parameters. During the policy running stage, DDPG execute actions generated by current policy with noises added, e.g. a = $\pi$(s)+noise, and store the RL transitions into the experience buffer $B$. After sampled trajectories stored, during the training stage of off-policy model-free RL, a minibatch of consisting of N tuples are randomly sampled from the experience buffer $B$ to update the actor and critic networks by minimizing the following loss:

$$L_Q = \frac{1}{N} \Sigma_i (y_i - Q_\emptyset(s_i, \pi_\theta(s_i)))^2$$ where target $y_i$ is the expected future accumulated return from step i:

$$y_i = r_i + \gamma Q_\emptyset(s_{i+1}, \pi_\theta(s_{i+1}))$$

As is shown in this equation, the target term $y_i$ also depends on the parameters $\emptyset$ and $\theta$. It potentially makes the training unstable. To solve this problem, the target network $Q_{\emptyset target}$ and $\pi_{\theta target}$ are introduced. The target networks are initialized with the same parameters as $Q_\emptyset$ and $\pi_\theta$. During the training, $\emptyset_{target}$ and $\theta_{target}$ are soft updated once per main network update by Polyak averaging:

$$\emptyset_{target} \leftarrow \tau\emptyset + (1 - \tau)\emptyset_{target}$$

$$\theta_{target} \leftarrow \tau\theta + (1 - \tau)\theta_{target}$$

- Where r < 1.
- Now the term $y_i$ becomes:

$$y_i = r_i + \gamma Q_{\emptyset target}(s_{i+1}, \pi_{\theta target}(s_{i+1}))$$

For actor network, the goal is to learn a policy with parameter $\theta$ that solves: $L_a = max_\theta \mathbb{E}[Q_\emptyset(s, \pi_\theta(s))]$ , where $\mathbb{E}$ is the expectation value of its argument.

With a batch sampling of N transitions, the policy gradient could be calculated as:

$$\nabla_\theta \; L_a = \frac{1}{N} \Sigma_i \nabla_a Q_\emptyset(s, a)|_{s=s_i, a=\pi_\theta(s)} \nabla_\theta \pi_\theta(s)|_{s=s_i}.$$

The off-policy reinforcement learning is more sample-efficient than on-policy reinforcement learning as it is able to repetitively optimize the policy from history trajectories. However, when the policy has bad initialization, it will lead to failed operations. In such case, RL needs to try and collect a huge amount of samples to approximate the correct Q function, and therefore, the sample-efficiency may still be an issue.

To further improve the model-free RL from a practical part, it is possible to first train the policy network with expert demonstrations. One reason caused the sample-efficiency issue is that at the beginning of the training stage, most of the generated trajectories are failed cases. The expert demonstrations may be stored into the experience buffer as well. During the training, besides the policy gradient loss, an auxiliary supervised learning loss may be computed too, as behaviour cloning (BC) loss: $L_{BC} = \sum_{i=1}^{N_D} \left\| \pi_\theta(s_i) - a_{demo_i} \right\|^2$ , where $a_{demo}$ is the demonstration action, $N_D$ denotes the transitions that are sampled from human demonstration trajectories.

To prevent the policy from falling into the sub-optimal solution when learning from demonstrations, the q-filter may be applied: criticized by the critic network, the behaviour cloning loss only is applied when demonstration action has better performance. The final behaviour cloning loss may be formulated as

$$L_{BC} = \sum_{i=1}^{N_D} \left\| \pi_\theta(s_i) - a_i \right\|^2 1_{Q(s_i, a_{demo_i}) > Q(s_i, \pi(s_i))}$$

Respectively, the gradient applied to the policy network would be:

$\lambda_1 \nabla_\theta J_a - \lambda_2 \nabla_\theta L_{BC}$, wherein the $\lambda_1$ and $\lambda_2$ are hyper parameters that define the weight for each loss, $\lambda_1 + \lambda_2 = 1, \lambda_1 > 0, \lambda_2 > 0$.

This kind of expert demonstration reduces the exploration phase of the RL.

The goal of the training stage of the RL model is to optimize the policy function to be able to accomplish the alignment task.

In this training example, the following parameters are given: 1) critic function $Q$ with parameter $\emptyset$; 2) policy function $\pi$ with parameter $\theta$; 3) target critic function $Q_{target}$ with parameter $\emptyset_{target}$; 4) policy function $\pi_{target}$ with parameter $\theta_{target}$; 5) experience replay buffer $B$; 6) corner detection function F; 7) camera captured image set $I = <im_1, im_2, im_3, im_4>$. Multiple tryout trajectories may be required during the training stage:

At the beginning of the tryout trajectory, the spreader's position is randomized: The height distance between spreader and container is randomized between 1 to 3 meters. The x-y displacement $d_x$ and $d_y$ are randomized between -25 cm to 25 cm. The angle displacement $\gamma$ (skew) is randomized between -5 degrees to 5 degrees.

In training phase, for each step in the trajectory:

- Detect corners: $<p_1, p_2, p_3, p_4> = F(I)$
- Calculate image plane symmetric coordinates states $s_t = S_{IPS_t}$
- Sample actions $a_t$ using policy function $\pi$:

$$a_t = \pi(s_t)$$

- Conduct action $a_t$.

During the training, actions $a$ may be e.g. determined based on event-based control or real-time based control. In event-based control, $a$ indicates the displacements of x-y movements and rotation angles ( e.g. a=[0.2, -0.2, 1] means: move the spreader to the right direction 20 cm, down 20 cm and rotate 1 degree clockwise). In real-time based control, $a$ indicates the direction of x-y movements and rotation motion, and corresponding duration (e.g. a = [-10, 0, 20] means: move the spreader to left for 1 second and rotating the spreader clockwise for 2 seconds).

- Wait for a certain time interval or till action $a$ has accomplished and get next states

$$s_{t+1} = S_{IPS_{t+1}}$$

- Calculate the image symmetric based reward r.
- Store the transition tuple t= $<s_t, a_t, r_t, s_{t+1}>$ into experience buffer B.

At the end of each step:

- Random sample mini-batch of experience of N transitions $t_i = < s_i, a_i, r_i, s_{i+1} >$ from B.
- Optimize Q by minimizing the loss:

$$L_Q = \frac{1}{N}\sum_i ((r_i + \gamma Q_{\emptyset_{target}}(s_{i+1}, \pi_{\theta_{target}}(s_{i+1}))) \quad - Q_\emptyset(s_i, a_i))^2$$

- Calculate the policy gradient

$$\nabla_\theta L_a = \frac{1}{N}\sum_i \nabla_a Q_\emptyset(s, a)|_{s=s_i, a=\pi_\theta(s)} \nabla_\theta \pi_\theta(s)|_{s=s_i}$$

If transition tuple $t_i$ is sampled from demonstrations, then update the actor policy with gradient:

$$\lambda_1 \nabla_\theta L_a - \lambda_2 \nabla_\theta L_{BC}$$

- Else, just update the actor network by only one step gradient ascent using: $\nabla_\theta L_a$
- At the end of each step, update the target networks' parameters using soft updating:

$$\emptyset_{target} \leftarrow \tau\emptyset + (1 - \tau)\emptyset_{target}$$

$$\theta_{target} \leftarrow \tau\theta + (1 - \tau)\theta_{target}$$

In testing phase, for each step in the trajectory:

- Detect corners: $<p_1, p_2, p_3, p_4> = F(I)$
- Calculate image-plane symmetric coordinates states $S_{IPS_t}$.
- Sample or evaluate actions $a$ using policy function $\pi$.

$$a = \pi(S_{IPS_t})$$

- Conduct action $a$.
- Actions $a$ may be e.g. determined based on even-based control or real-time based control. In event-based control, $a$ indicates the displacements of x-y movements and rotation angles ( e.g. a=[0.2, -0.2, 1] means: move the spreader to the right direction 20 cm, down 20 cm and rotate 1 degree clockwise). In real-time based control, $a$ indicates the direction of x-y movements and rotation motion, and corresponding duration (e.g. a = [-10, 0, 20] means: move the spreader to left for 1 second and rotating the spreader clockwise for 2 seconds).
- Wait for a certain time interval or till action $a$ has accomplished and get next states $S_{IPS_{t+1}}$
- Iterate this step.

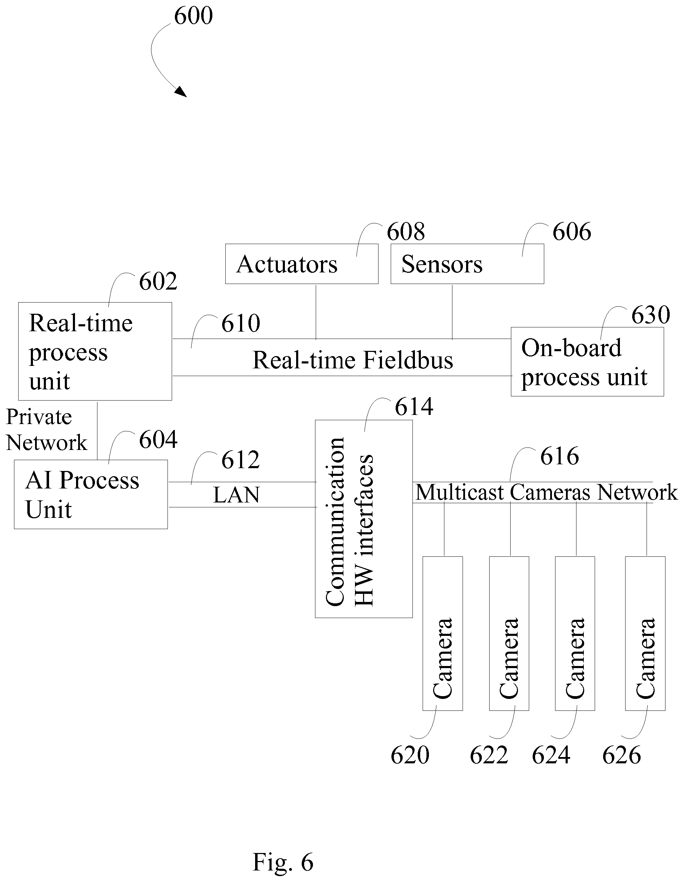

Fig. 6 shows, by way of example, a system architecture 600. The system architecture comprises a real-time process unit 602 and an artificial intelligence (AI) process unit 604. AI process unit can be a parallel processing capable processor which executes the RL and detects the features, e.g. container's corners. The role of the real-time processor 602 is to maintain real-time communication by receiving time-based signals and transmitting data for time-critical process demands. This process unit may be e.g. a reduced instruction set computer (RISC) process unit. The communication channel between the real-time hardware components, e.g. sensors 606 and actuators 608, and on-board process unit 630, may be e.g. a real-time fieldbus 610. Alternatively, a low-latency AI process unit 604 can comprise a real-time process unit 602 for receiving time-based signals and transmitting data for time-critical process demands. The sensors may comprise e.g. range sensors, distance sensors, lidars, etc.

The AI process unit 604 is the process unit that runs the RL algorithm. Running the RL algorithm does not necessarily need to be performed as a hard-real-time but as an online module which responds fast enough. AI process unit receives via a communication channel, e.g. a local area network 612 through communication interfaces 614 input from two or more cameras, e.g. from four cameras 620, 633, 624, 626 connected to multicast cameras network 616. The calculations are implemented on a process unit capable of providing fast response based on its on HW resources of memory, process power in CPU, or parallel processing power, e.g. in a graphics processing unit (GPU). Here, "fast enough" means that the RL results should be ready in the frequencies higher than the natural frequency of the crane mechanics. For example, the results should be ready, e.g. at least two to ten times higher than the natural frequency of the crane mechanics. Therefore, the specific process power specifications may depend on the requirements of the system mechanics and availability of the processors. Depending on the limitations of the application environment, the process units may be placed in the electric house of the mobile platform or the camera units. As shown in the Fig. 6, AI process unit 604 has access to platform's run-time information through the real-time process unit 602. AI process unit and real-time process unit may be physically placed in the same enclosure and/or partially share the resources.

Fig. 7 shows, by way of example, a block diagram of an apparatus 700 capable of performing the method disclosed herein. An apparatus configured to perform the method disclosed herein comprises means for performing the method. The means comprises at least one processor 710; and at least one memory 720 including computer program code, the at least one memory and the computer program code configured to, with the at least one processor, cause the performance of the apparatus. Memory 720 may comprise computer instructions that processor 710 is configured to execute. Memory 720 may be at least in part comprised in processor 710. Memory 720 may be at least in part external to apparatus 700 but accessible to apparatus 700.

The apparatus may be the AI process unit 604, or another apparatus connected to the AI process unit. The apparatus is capable of transmitting action commands, e.g. control action commands, directly or indirectly to the actuators 608 for moving the spreader according to the commands. The user interface, UI 730 may be e.g. the on-board process unit 630. The UI may comprise e.g. a display, a keyboard, a touchscreen, and/or a mouse. A user may operate the apparatus via the UI.

The apparatus may comprise communication means 740. The communication means may comprise e.g. transmitter and receiver configured to transmit and receive, respectively, information, via wired or wireless communication.

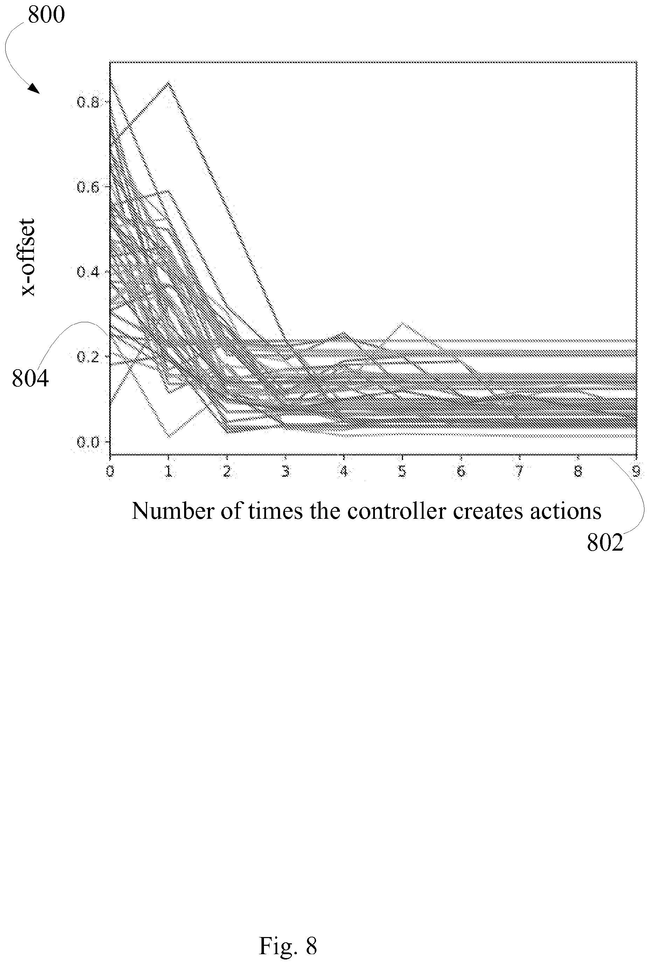

Fig. 8, Fig. 9 and Fig. 10 show, by way of examples, plots 800, 900, 1000 of error measurements of alignment trials. The x-axis 802, 902, 1002 of each of the plots represents the number of times the controller has created actions that cause the spreader to move. Different lines in the plots represent different alignment trials by the system or apparatus for positioning of a spreader.

The y-axis 804 of Fig. 8 represents the x-offset in normalized distance units. The x-offset indicates the difference in normalized distance units on the x-y plane, in x-direction, measured e.g. between center points of the spreader and the container. (See Fig. 1, offset 110)

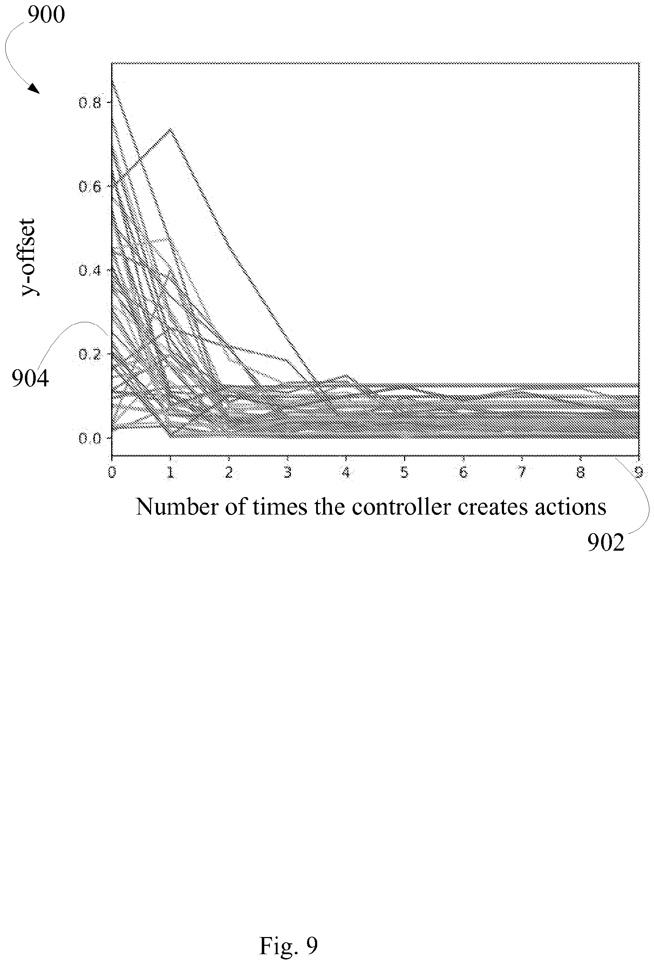

The y-axis 904 of Fig. 9 represents the y-offset in normalized distance units. The y-offset indicates the difference in normalized distance units on the x-y plane, in y-direction, measured e.g. between center points of the spreader and the container. (See Fig. 1, offset 110)

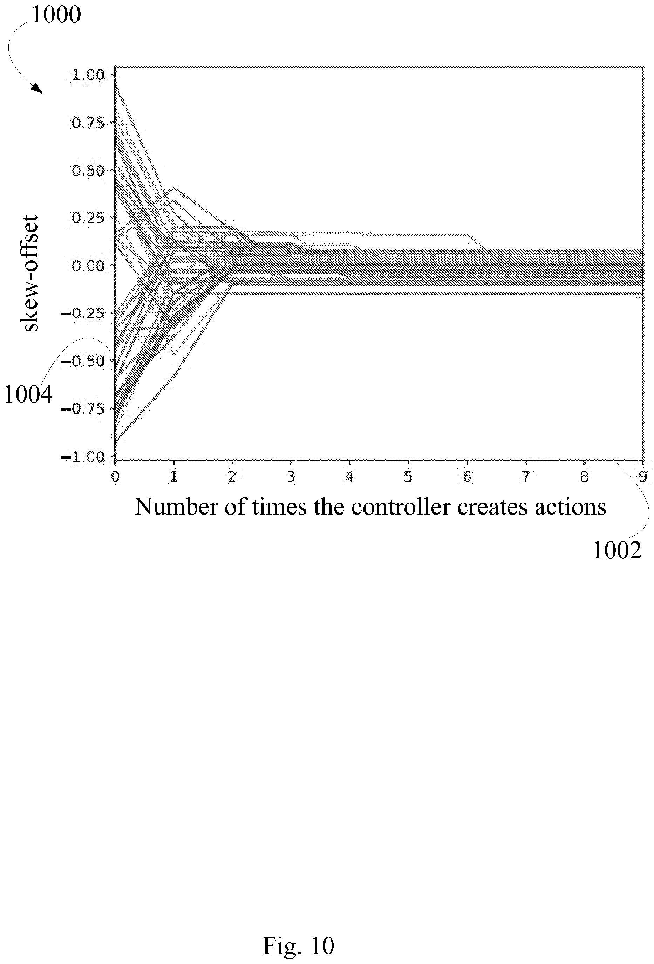

The y-axis 1004 of Fig. 10 represents the skew-offset in normalized angular units. The skew-offset indicates the skew angle between the spreader and the container. (See Fig. 1, angle 130).

In spreader alignment phase, the goal of the policy generated by controller is to minimize the x-offset, y-offset and the skew angle such that they equal zero.

Fig. 8, Fig. 9 and Fig. 10 shows that the method disclosed herein enables positioning of the spreader with respect to a container accurately and within acceptable tolerances of the mechanical system. The error is reduced to approximately 1/4 of the maximum offset in the examples of Fig. 8 and Fig. 9, and to approximately 1/3 of the maximum offset in the example of Fig. 10.

**Claims**

1. An apparatus comprising means for:

   receiving a first image of a first feature of a load;
   receiving a second image of a second feature of the load;
   determining image plane coordinates of the features of the load based on the first image and the second image;
   **characterised in that** the apparatus further comprises means for determining a pairwise operation between the image plane coordinates of the first feature and the image plane coordinates of the second feature, wherein a pairwise operator of the pairwise operation has a monotonic or piecewise monotonic behaviour;
   determining one or more action candidates based on the pairwise operation;
   evaluating the one or more action candidates using an intermediate medium embodying historical experience information within a finite time horizon to obtain cost(s) and/or
   reward(s) for the one or more action candidates; and
   determining a control action based on the cost(s) and/or reward(s) of the action candidates, wherein the control action causes a spreader to move with respect to the load.

2. The apparatus of claim 1, wherein a self-exploring algorithm is used in the evaluating the one or more action candidates.

3. The apparatus of claim 1 or 2, wherein the one or more action candidates are sample time independent.

4. The apparatus of any preceding claim, wherein the one or more action candidates and control action are defined based on displacement to x-direction, displacement to y-direction and rotation.

5. The apparatus of any preceding claim, wherein the pairwise operator has a piecewise monotonic behaviour correlated with decreasing or increasing errors in alignment of the spreader and the load; and

   wherein the pairwise operation is a pairwise symmetry operation; or
   the pairwise operator is a norm of dot or cross multiplication of error vectors in the first image and the second image; or
   the pairwise operator is a norm of dot or cross multiplication of feature position vectors in the first image and the second image.

6. The apparatus of any preceding claim, wherein the reward achieves its highest value when the spreader substantially aligns with the load or achieves substantial alignment in the finite time horizon in the future.

7. The apparatus of any preceding claim, wherein the cost is proportional to force or energy or pressure or voltage or current or placement or placement consumption of the action candidates and their effect in the spreader motion at the current moment or in the finite time horizon in the future; and/or reflects risk of losing features in a camera's field of view at the current moment or in the finite time horizon in the future.

8. The apparatus of any preceding claim, further comprising means for transmitting the control action to one or more actuators for moving the spreader with respect to the load.

9. The apparatus of any preceding claim, wherein the first image is received from a first camera located on a first corner of a spreader and the second image is received from a second camera located on a second corner of the spreader, wherein the first corner and the second corner are different corners, and wherein the first feature of the load is a first corner of a container and the second feature of the load is a second corner of the container, wherein the first corner of the spreader and the first corner of the container are corresponding corners and the second corner of the spreader and the second corner of the container are corresponding corners.

10. The apparatus of claim 9, further comprising means for:

    receiving a third image of a third feature of the load, wherein the third image is received from a third camera located on a third corner of the spreader;
    receiving a fourth image of a fourth feature of the load, wherein the fourth image is received from a fourth camera located on the fourth corner of the spreader; wherein the third corner and the fourth corner are different corners than the first corner and the second comer; and wherein the third feature of the load is a third corner of the container and the fourth feature of the load is a fourth corner of the container, wherein the third corner of the spreader and the third corner of the container are corresponding corners and the fourth corner of the spreader and the fourth corner of the container are corresponding corners; and the apparatus further comprises means for determining image plane coordinates of the third and fourth features of the load based on the third image and the fourth image;
    determining another pairwise operation between the image plane coordinates of the third feature and the image plane coordinates of the fourth feature, wherein the pairwise operator of the pairwise operation has a monotonic or piecewise monotonic behaviour;
    determining one or more action candidates based on the pairwise operations.

11. The apparatus of any preceding claim, wherein the means comprises at least one processor; and at least one memory including computer program code, the at least one memory and the computer program code configured to, with the at least one processor, cause the performance of the apparatus.

12. A method comprising:

    receiving a first image of a first feature of a load;

receiving a second image of a second feature of the load;

determining image plane coordinates of the features of the load based on the first image and the second image; **characterised in that** the method further comprises the steps of

determining a pairwise operation between the image plane coordinates of the first feature and the image plane coordinates of the second feature, wherein a pairwise operator of the pairwise operation has a monotonic or piecewise monotonic behaviour;

determining one or more action candidates based on the pairwise operation;

evaluating the one or more action candidates using an intermediate medium embodying historical experience information within a finite time horizon to obtain cost(s) and/or

reward(s) for the one or more action candidates; and

determining a control action based on the cost(s) and/or reward(s) of the action candidates, wherein the control action causes a spreader to move with respect to the load.

13. The method of claim 12, wherein a self-exploring algorithm is used in the evaluating the one or more action candidates.

14. The method of claim 12 or 13, wherein the one or more action candidates are sample time independent.

15. The method of any of the claims 12 to 14, wherein the one or more action candidates and control action are defined based on displacement to x-direction, displacement to y-direction and rotation.

16. The method of any of the claims 12 to 15, wherein the pairwise operator has a piecewise monotonic behaviour correlated with decreasing or increasing errors in alignment of the spreader and the load; and

wherein the pairwise operation is a pairwise symmetry operation; or

the pairwise operator is a norm of dot or cross multiplication of error vectors in the first image and the second image; or

the pairwise operator is a norm of dot or cross multiplication of feature position vectors in the first image and the second image.

17. The method of any of the claims 12 to 16, wherein the reward achieves its highest value when the spreader substantially aligns with the load or achieves substantial alignment in the finite time horizon in the future.

18. The method of any of the claims 12 to 17, wherein the cost is proportional to force or energy or pressure or voltage or current or placement or placement consumption of the action candidates and their effect in the spreader motion at the current moment or in the finite time horizon in the future; and/or reflects risk of losing features in a camera's field of view at the current moment or in the finite time horizon in the future.

19. The method of any of the claims 12 to 18, further comprising

transmitting the control action directly or indirectly to one or more actuators for moving the spreader with respect to the load.

20. The method of any of the claims 12 to 19, wherein the first image is received from a first camera located on a first corner of a spreader and the second image is received from a second camera located on a second corner of the spreader, wherein the first corner and the second corner are different corners, and wherein the first feature of the load is a first corner of a container and the second feature of the load is a second corner of the container, wherein the first corner of the spreader and the first corner of the container are corresponding corners and the second corner of the spreader and the second corner of the container are corresponding corners.

21. The method of claim 20, further comprising

receiving a third image of a third feature of the load, wherein the third image is received from a third camera located on a third corner of the spreader;

receiving a fourth image of a fourth feature of the load, wherein the fourth image is received from a fourth camera located on the fourth corner of the spreader; wherein the third corner and the fourth corner are different corners than the first corner and the second comer; and wherein the third feature of the load is a third corner of the container and the fourth feature of the load is a fourth corner of the container, wherein the third corner of the spreader and the third corner of the container are corresponding corners and the fourth corner of the spreader and the fourth corner of the container are corresponding corners; and the apparatus further comprises means for

determining image plane coordinates of the third and fourth features of the load based on the third image and the fourth image;

determining another pairwise operation between the image plane coordinates of the third feature and the image plane coordinates of the fourth feature, wherein the pairwise operator of the pairwise operation has a monotonic or piecewise monotonic behaviour; determining one or more action candidates based on the pairwise operations.

22. A computer readable medium comprising program instructions that, when executed by at least one processor, cause an apparatus to perform at least:

receiving a first image of a first feature of a load;

receiving a second image of a second feature of the load;

determining image plane coordinates of the features of the load based on the first image and the second image; **characterised in that** the instructions further comprise the steps of determining a pairwise operation between the image plane coordinates of the first feature and the image plane coordinates of the second feature, wherein a pairwise operator of the pairwise operation has a monotonic or piecewise monotonic behaviour;

determining one or more action candidates based on the pairwise operation;

evaluating the one or more action candidates using an intermediate medium embodying historical experience information within a finite time horizon to obtain cost(s) and/or reward(s) for the one or more action candidates;

determining a control action based on the cost(s) and/or reward(s) of the action candidates, wherein the control action causes a spreader to move with respect to the load.

23. The computer readable medium according to claim 22, comprising program instruction that, when executed by at least one processor, cause an apparatus to perform at least the method of any of claims 13 to 21.

**Patentansprüche**

1. Einrichtung, die Mittel umfasst zum:

Empfangen eines ersten Bildes eines ersten Merkmals einer Ladung;

Empfangen eines zweiten Bildes eines zweiten Merkmals der Ladung;

Bestimmen von Bildebenenkoordinaten der Merkmale der Ladung auf Grundlage des ersten Bildes und des zweiten Bildes;

**dadurch gekennzeichnet, dass** die Einrichtung weiter Mittel umfasst zum

Bestimmen einer paarweisen Operation zwischen den Bildebenenkoordinaten des ersten Merkmals und den Bildebenenkoordinaten des zweiten Merkmals, wobei ein paarweiser Operator der paarweisen Operation ein monotones oder stückweise monotones Verhalten aufweist;

Bestimmen eines oder mehrerer Aktionskandidaten auf Grundlage der paarweisen Operation;

Bewerten des einen oder der mehreren Aktionskandidaten unter Verwendung eines Zwischenmediums, das historische Erfahrungsinformationen innerhalb eines endlichen Zeithorizonts enthält, um Kosten und/oder Belohnung(en) für den einen oder die mehreren Aktionskandidaten zu erhalten; und

Bestimmen einer Steueraktion auf Grundlage der Kosten und/oder Belohnung(en) der Aktionskandidaten, wobei die Steueraktion bewirkt, dass sich ein Spreader in Bezug auf die Ladung bewegt.

2. Einrichtung nach Anspruch 1, wobei bei der Bewertung des einen oder der mehreren Aktionskandidaten ein selbsterkundender Algorithmus verwendet wird.

3. Einrichtung nach Anspruch 1 oder 2, wobei der eine oder die mehreren Aktionskandidaten unabhängig von der Abtastzeit sind.

4. Einrichtung nach einem vorstehenden Anspruch, wobei der eine oder die mehreren Aktionskandidaten und die Steueraktion auf Grundlage einer Verschiebung in x-Richtung, Verschiebung in $\gamma$-Richtung und Drehung definiert werden.

5. Einrichtung nach einem vorstehenden Anspruch, wobei der paarweise Operator ein stückweise monotones Verhalten aufweist, das mit abnehmenden oder zunehmenden Fehlern bei der Ausrichtung des Spreaders und der Ladung korreliert; und

wobei die paarweise Operation eine paarweise Symmetrieoperation ist; oder

der paarweise Operator eine Norm der Punkt- oder Kreuzmultiplikation von Fehlervektoren im ersten Bild und dem zweiten Bild ist; oder

der paarweise Operator eine Norm der Punkt- oder Kreuzmultiplikation von Merkmalspositionsvektoren im ersten Bild und dem zweiten Bild ist.

6. Einrichtung nach einem vorstehenden Anspruch, wobei die Belohnung ihren höchsten Wert erreicht, wenn sich der Spreader im Wesentlichen mit der Ladung ausrichtet oder in dem endlichen Zeithorizont in der Zukunft wesentliche Ausrichtung erreicht.

7. Einrichtung nach einem vorstehenden Anspruch, wobei die Kosten proportional zu Kraft oder Energie oder Druck oder Spannung oder Strom oder Platzierung oder Platzverbrauch der Aktionskandidaten und ihrer Wirkung in der Spreaderbewegung im aktuellen Moment oder im endlichen Zeithorizont in der Zukunft sind; und/oder das Risiko widerspiegeln, dass Merkmale im Sichtfeld einer Kamera zum aktuellen Zeitpunkt oder in dem endlichen Zeithorizont in der Zukunft verloren gehen.

8. Einrichtung nach einem vorstehenden Anspruch, die weiter Mittel umfasst zum
Übertragen der Steueraktion an einen oder mehrere Aktoren zum Bewegen des Spreaders in Bezug auf die Ladung.

9. Einrichtung nach einem vorstehenden Anspruch, wobei das erste Bild von einer ersten Kamera empfangen wird, die sich an einer ersten Ecke eines Spreaders befindet, und das zweite Bild von einer zweiten Kamera empfangen wird, die sich an einer zweiten Ecke des Spreaders befindet, wobei die erste Ecke und die zweite Ecke sich unterscheidende Ecken sind, und wobei das erste Merkmal der Ladung eine erste Ecke eines Containers ist und das zweite Merkmal der Ladung eine zweite Ecke des Containers ist, wobei die erste Ecke des Spreaders und die erste Ecke des Containers entsprechende Ecken sind und die zweite Ecke des Spreaders und die zweite Ecke des Containers entsprechende Ecken sind.

10. Einrichtung nach Anspruch 9, die weiter Mittel umfasst zum:

Empfangen eines dritten Bildes eines dritten Merkmals der Ladung, wobei das dritte Bild von einer dritten Kamera empfangen wird, die sich an einer dritten Ecke des Spreaders befindet;
Empfangen eines vierten Bildes eines vierten Merkmals der Ladung, wobei das vierte Bild von einer vierten Kamera empfangen wird, die sich an der vierten Ecke des Spreaders befindet; wobei die dritte Ecke und die vierte Ecke sich von der ersten Ecke und der zweiten Ecke unterscheidende Ecken sind; und wobei das dritte Merkmal der Ladung eine dritte Ecke des Containers ist und das vierte Merkmal der Ladung eine vierte Ecke des Containers ist, wobei die dritte Ecke des Spreaders und die dritte Ecke des Containers entsprechende Ecken sind und die vierte Ecke des Spreaders und die vierte Ecke des Containers entsprechende Ecken sind; und die Einrichtung weiter Mittel umfasst zum
Bestimmen von Bildebenenkoordinaten des dritten und des vierten Merkmals der Ladung auf Grundlage des dritten Bildes und des vierten Bildes;
Bestimmen einer weiteren paarweisen Operation zwischen den Bildebenenkoordinaten des dritten Merkmals und den Bildebenenkoordinaten des vierten Merkmals, wobei der paarweise Operator der paarweisen Operation ein monotones oder stückweise monotones Verhalten aufweist;
Bestimmen eines oder mehrerer Aktionskandidaten auf Grundlage der paarweisen Operationen.

11. Einrichtung nach einem vorstehenden Anspruch, wobei die Mittel mindestens einen Prozessor umfassen; und mindestens einen Speicher, der Computerprogrammcode einschließt, wobei der mindestens eine Speicher und der Computerprogrammcode so konfiguriert sind, dass sie mit dem mindestens einen Prozessor die Durchführung der Einrichtung bewirken.

12. Verfahren, umfassend:

Empfangen eines ersten Bildes eines ersten Merkmals einer Ladung;
Empfangen eines zweiten Bildes eines zweiten Merkmals der Ladung;
Bestimmen von Bildebenenkoordinaten der Merkmale der Ladung auf Grundlage des ersten Bildes und des zweiten Bildes;
**dadurch gekennzeichnet, dass** das Verfahren weiter die Schritte umfasst zum
Bestimmen einer paarweisen Operation zwischen den Bildebenenkoordinaten des ersten Merkmals und den Bildebenenkoordinaten des zweiten Merkmals, wobei ein paarweiser Operator der paarweisen Operation ein monotones oder stückweise monotones Verhalten aufweist;

Bestimmen eines oder mehrerer Aktionskandidaten auf Grundlage der paarweisen Operation;

Bewerten des einen oder der mehreren Aktionskandidaten unter Verwendung eines Zwischenmediums, das historische Erfahrungsinformationen innerhalb eines endlichen Zeithorizonts enthält, um Kosten und/oder Belohnung(en) für den einen oder die mehreren Aktionskandidaten zu erhalten; und

Bestimmen einer Steueraktion auf Grundlage der Kosten und/oder Belohnung(en) der Aktionskandidaten, wobei die Steueraktion bewirkt, dass sich ein Spreader in Bezug auf die Ladung bewegt.

13. Verfahren nach Anspruch 12, wobei bei der Bewertung des einen oder der mehreren Aktionskandidaten ein selbsterkundender Algorithmus verwendet wird.

14. Verfahren nach Anspruch 12 oder 13, wobei der eine oder die mehreren Aktionskandidaten unabhängig von der Abtastzeit sind.

15. Verfahren nach einem der Ansprüche 12 bis 14, wobei der eine oder die mehreren Aktionskandidaten und die Steueraktion auf Grundlage einer Verschiebung in x-Richtung, Verschiebung in $\gamma$-Richtung und Drehung definiert werden.

16. Verfahren nach einem der Ansprüche 12 bis 15, wobei der paarweise Operator ein stückweise monotones Verhalten aufweist, das mit abnehmenden oder zunehmenden Fehlern bei der Ausrichtung des Spreaders und der Ladung korreliert; und

wobei die paarweise Operation eine paarweise Symmetrieoperation ist; oder

der paarweise Operator eine Norm der Punkt- oder Kreuzmultiplikation von Fehlervektoren im ersten Bild und dem zweiten Bild ist; oder

der paarweise Operator eine Norm der Punkt- oder Kreuzmultiplikation von Merkmalspositionsvektoren im ersten Bild und dem zweiten Bild ist.

17. Verfahren nach einem der Ansprüche 12 bis 16, wobei die Belohnung ihren höchsten Wert erreicht, wenn sich der Spreader im Wesentlichen mit der Ladung ausrichtet oder in dem endlichen Zeithorizont in der Zukunft wesentliche Ausrichtung erreicht.

18. Verfahren nach einem der Ansprüche 12 bis 17, wobei die Kosten proportional zu Kraft oder Energie oder Druck oder Spannung oder Strom oder Platzierung oder Platzverbrauch der Aktionskandidaten und ihrer Auswirkung auf die Spreaderbewegung im aktuellen Moment oder im endlichen Zeithorizont in der Zukunft sind; und/oder das Risiko widerspiegeln, dass Merkmale im Sichtfeld einer Kamera zum aktuellen Zeitpunkt oder in dem endlichen Zeithorizont in der Zukunft verloren gehen.

19. Verfahren nach einem der Ansprüche 12 bis 18, weiter umfassend
Übertragen der Steueraktion direkt oder indirekt an einen oder mehrere Aktoren zum Bewegen des Spreaders in Bezug auf die Ladung.

20. Verfahren nach einem der Ansprüche 12 bis 19, wobei das erste Bild von einer ersten Kamera empfangen wird, die sich an einer ersten Ecke eines Spreaders befindet, und das zweite Bild von einer zweiten Kamera empfangen wird, die sich an einer zweiten Ecke des Spreaders befindet, wobei die erste Ecke und die zweite Ecke sich unterscheidende Ecken sind, und wobei das erste Merkmal der Ladung eine erste Ecke eines Containers ist und das zweite Merkmal der Ladung eine zweite Ecke des Containers ist, wobei die erste Ecke des Spreaders und die erste Ecke des Containers entsprechende Ecken sind und die zweite Ecke des Spreaders und die zweite Ecke des Containers entsprechende Ecken sind.

21. Verfahren nach Anspruch 20, weiter umfassend

Empfangen eines dritten Bildes eines dritten Merkmals der Ladung, wobei das dritte Bild von einer dritten Kamera empfangen wird, die sich an einer dritten Ecke des Spreaders befindet;
Empfangen eines vierten Bildes eines vierten Merkmals der Ladung, wobei das vierte Bild von einer vierten Kamera empfangen wird, die sich an der vierten Ecke des Spreaders befindet; wobei die dritte Ecke und die vierte Ecke sich von der ersten Ecke und der zweiten Ecke unterscheidende Ecken sind; und wobei das dritte Merkmal der Ladung eine dritte Ecke des Containers ist und das vierte Merkmal der Ladung eine vierte Ecke des Containers ist, wobei die dritte Ecke des Spreaders und die dritte Ecke des Containers entsprechende Ecken sind und die vierte Ecke des Spreaders und die vierte Ecke des Containers entsprechende Ecken sind; und die Einrichtung weiter Mittel umfasst zum

Bestimmen von Bildebenenkoordinaten des dritten und des vierten Merkmals der Ladung auf Grundlage des dritten Bildes und des vierten Bildes;

Bestimmen einer weiteren paarweisen Operation zwischen den Bildebenenkoordinaten des dritten Merkmals und den Bildebenenkoordinaten des vierten Merkmals, wobei der paarweise Operator der paarweisen Operation ein monotones oder stückweise monotones Verhalten aufweist;

Bestimmen eines oder mehrerer Aktionskandidaten auf Grundlage der paarweisen Operationen.

22. Computerlesbares Medium, das Programmanweisungen umfasst, die, wenn sie von mindestens einem Prozessor ausgeführt werden, bewirken, dass eine Einrichtung mindestens Folgendes durchführt:

Empfangen eines ersten Bildes eines ersten Merkmals einer Ladung;

Empfangen eines zweiten Bildes eines zweiten Merkmals der Ladung;

Bestimmen von Bildebenenkoordinaten der Merkmale der Ladung auf Grundlage des ersten Bildes und des zweiten Bildes;

**dadurch gekennzeichnet, dass** die Anweisungen weiter die Schritte umfassen zum

Bestimmen einer paarweisen Operation zwischen den Bildebenenkoordinaten des ersten Merkmals und den Bildebenenkoordinaten des zweiten Merkmals, wobei ein paarweiser Operator der paarweisen Operation ein monotones oder stückweise monotones Verhalten aufweist;

Bestimmen eines oder mehrerer Aktionskandidaten auf Grundlage der paarweisen Operation;

Bewerten des einen oder der mehreren Aktionskandidaten unter Verwendung eines Zwischenmediums, das historische Erfahrungsinformationen innerhalb eines endlichen Zeithorizonts enthält, um Kosten und/oder Belohnung(en) für den einen oder die mehreren Aktionskandidaten zu erhalten;

Bestimmen einer Steueraktion auf Grundlage der Kosten und/oder Belohnung(en) der Aktionskandidaten, wobei die Steueraktion bewirkt, dass sich ein Spreader in Bezug auf die Ladung bewegt.

23. Computerlesbares Medium nach Anspruch 22, das Programmanweisungen umfasst, die, wenn sie von mindestens einem Prozessor ausgeführt werden, bewirken, dass eine Einrichtung mindestens das Verfahren nach einem der Ansprüche 13 bis 21 durchführt.

## Revendications

1. Appareil, comprenant des moyens pour :

recevoir une première image d'une première caractéristique d'une charge ;

recevoir une deuxième image d'une deuxième caractéristique de la charge ;

déterminer des coordonnées de plan d'image des caractéristiques de la charge sur la base de la première image et de la deuxième image ;

**caractérisé en ce que** l'appareil comprend en outre des moyens pour

déterminer une opération par paire entre les coordonnées de plan d'image de la première caractéristique et les coordonnées de plan d'image de la deuxième caractéristique, dans lequel un opérateur par paire de l'opération par paire présente un comportement monotone ou monotone par morceaux ;

déterminer un ou plusieurs candidats à l'action sur la base de l'opération par paire ;

évaluer les un ou plusieurs candidats à l'action à l'aide d'un support intermédiaire contenant des informations d'expérience historique dans un horizon temporel fini pour obtenir un ou plusieurs coûts et/ou une ou plusieurs récompenses pour les un ou plusieurs candidats à l'action ; et

déterminer une action de commande sur la base du ou des coûts et/ou de la ou des récompenses des candidats à l'action, dans lequel l'action de commande amène un palonnier à se déplacer par rapport à la charge.

2. Appareil selon la revendication 1, dans lequel un algorithme d'auto-exploration est utilisé dans l'évaluation des un ou plusieurs candidats à l'action.

3. Appareil selon la revendication 1 ou 2, dans lequel les un ou plusieurs candidats à l'action sont indépendants d'un temps d'échantillonnage.

4. Appareil selon une quelconque revendication précédente, dans lequel les un ou plusieurs candidats à l'action et l'action de commande sont définis sur la base d'un déplacement dans une direction x, d'un déplacement dans une direction y et d'une rotation.

5. Appareil selon une quelconque revendication précédente, dans lequel l'opérateur par paire présente un comportement monotone par morceaux corrélé à des erreurs décroissantes ou croissantes d'alignement du palonnier et de la charge ; et

   dans lequel l'opération par paire est une opération de symétrie par paire ; ou
   l'opérateur par paire est une norme de multiplication scalaire ou croisée de vecteurs d'erreur dans la première image et la deuxième image ; ou
   l'opérateur par paire est une norme de multiplication scalaire ou croisée de vecteurs de position de caractéristique dans la première image et la deuxième image.

6. Appareil selon une quelconque revendication précédentes dans lequel la récompense atteint sa valeur la plus élevée lorsque le palonnier s'aligne sensiblement sur la charge ou atteint un alignement substantiel dans un horizon temporel fini dans le futur.

7. Appareil selon une quelconque revendication précédente, dans lequel le coût est proportionnel à la force ou à l'énergie ou à la pression ou à la tension ou au courant ou au placement ou à la consommation de placement des candidats à l'action et à leur effet sur le mouvement de palonnier au moment actuel ou dans l'horizon temporel fini dans le futur ; et/ou reflète le risque de perte de caractéristiques dans le champ de vision d'une caméra au moment actuel ou dans l'horizon temporel fini dans le futur.

8. Appareil selon une quelconque revendication précédente, comprenant en outre des moyens pour transmettre l'action de commande à un ou plusieurs actionneurs pour déplacer le palonnier par rapport à la charge.

9. Appareil selon une quelconque revendication précédente, dans lequel la première image est reçue d'une première caméra située sur un premier coin d'un palonnier et la deuxième image est reçue d'une deuxième caméra située sur un deuxième coin du palonnier, dans lequel le premier coin et le deuxième coin sont des coins différents, et dans lequel la première caractéristique de la charge est un premier coin d'un conteneur et la deuxième caractéristique de la charge est un deuxième coin du conteneur, dans lequel le premier coin du palonnier et le premier coin du conteneur sont des coins correspondants et le deuxième coin du palonnier et le deuxième coin du conteneur sont des coins correspondants.

10. Appareil selon la revendication 9, comprenant en outre des moyens pour :

    recevoir une troisième image d'une troisième caractéristique de la charge, dans lequel la troisième image est reçue d'une troisième caméra située sur un troisième coin du palonnier ;
    recevoir une quatrième image d'une quatrième caractéristique de la charge, dans lequel la quatrième image est reçue d'une quatrième caméra située sur le quatrième coin du palonnier ; dans lequel le troisième coin et le quatrième coin sont des coins différents du premier coin et du deuxième coin ; et dans lequel la troisième caractéristique de la charge est un troisième coin du conteneur et la quatrième caractéristique de la charge est un quatrième coin du conteneur, dans lequel le troisième coin du palonnier et le troisième coin du conteneur sont des coins correspondants et le quatrième coin du palonnier et le quatrième coin du conteneur sont des coins correspondants ; et
    l'appareil comprend en outre des moyens pour
    déterminer les coordonnées de plan d'image des troisième et quatrième caractéristiques de la charge sur la base de la troisième image et de la quatrième image ;
    déterminer une autre opération par paire entre les coordonnées de plan d'image de la troisième caractéristique et les coordonnées de plan d'image de la quatrième caractéristique, dans lequel l'opérateur par paire de l'opération par paire présente un comportement monotone ou monotone par morceaux ;
    déterminer un ou plusieurs candidats à l'action sur la base des opérations par paire.

11. Appareil selon une quelconque revendication précédente, dans lequel les moyens comprennent au moins un processeur ; et au moins une mémoire incluant un code de programme informatique, la au moins une mémoire et le code de programme informatique étant configurés pour provoquer, avec le au moins un processeur, la performance de l'appareil.

**12.** Procédé comprenant :

la réception d'une première image d'une première caractéristique d'une charge ;
la réception d'une deuxième image d'une deuxième caractéristique de la charge ;
la détermination de coordonnées de plan d'image des caractéristiques de la charge sur la base de la première image et de la deuxième image ;
**caractérisé en ce que** le procédé comprend en outre les étapes consistant à
déterminer une opération par paire entre les coordonnées du plan d'image de la première caractéristique et les coordonnées du plan d'image de la deuxième caractéristique, dans lequel un opérateur par paire de l'opération par paire présente un comportement monotone ou monotone par morceaux ;
déterminer un ou plusieurs candidats à l'action sur la base de l'opération par paire ;
évaluer les un ou plusieurs candidats à l'action à l'aide d'un support intermédiaire contenant des informations d'expérience historique dans un horizon temporel fini pour obtenir un ou plusieurs coûts et/ou une ou plusieurs récompenses pour les un ou plusieurs candidats à l'action ; et
déterminer une action de commande sur la base du ou des coûts et/ou de la ou des récompenses des candidats à l'action, dans lequel l'action de commande amène un palonnier à se déplacer par rapport à la charge.

**13.** Procédé selon la revendication 12, dans lequel un algorithme d'auto-exploration est utilisé dans l'évaluation des un ou plusieurs candidats à l'action.

**14.** Procédé selon la revendication 12 ou 13, dans lequel les un ou plusieurs candidats à l'action sont indépendants d'un temps d'échantillonnage.

**15.** Procédé selon l'une quelconque des revendications 12 à 14, dans lequel les un ou plusieurs candidats à l'action et l'action de commande sont définis sur la base d'un déplacement dans une direction x, d'un déplacement dans une direction y et d'une rotation.

**16.** Procédé selon l'une quelconque des revendications 12 à 15, dans lequel l'opérateur par paire présente un comportement monotone par morceaux corrélé à des erreurs décroissantes ou croissantes d'alignement du palonnier et de la charge ; et

dans lequel l'opération par paire est une opération de symétrie par paire ; ou
l'opérateur par paire est une norme de multiplication scalaire ou croisée de vecteurs d'erreur dans la première image et la deuxième image ; ou
l'opérateur par paire est une norme de multiplication scalaire ou croisée de vecteurs de position de caractéristique dans la première image et la deuxième image.

**17.** Procédé selon l'une quelconque des revendications 12 à 16, dans lequel la récompense atteint sa valeur la plus élevée lorsque le palonnier s'aligne sensiblement sur la charge ou atteint un alignement substantiel dans un horizon temporel fini dans le futur.

**18.** Procédé selon l'une quelconque des revendications 12 à 17, dans lequel le coût est proportionnel à la force ou à l'énergie ou à la pression ou à la tension ou au courant ou au placement ou à la consommation de placement des candidats à l'action et à leur effet sur le mouvement de palonnier au moment actuel ou dans l'horizon temporel fini dans le futur ; et/ou reflète le risque de perte de caractéristiques dans le champ de vision d'une caméra au moment actuel ou dans l'horizon temporel fini dans le futur.

**19.** Procédé selon l'une quelconque des revendications 12 à 18, comprenant en outre :
la transmission de l'action de commande directement ou indirectement à un ou plusieurs actionneurs pour déplacer le palonnier par rapport à la charge.

**20.** Procédé selon l'une quelconque des revendications 12 à 19, dans lequel la première image est reçue d'une première caméra située sur un premier coin d'un palonnier et la deuxième image est reçue d'une deuxième caméra située sur un deuxième coin du palonnier, dans lequel le premier coin et le deuxième coin sont des coins différents et dans lequel la première caractéristique de la charge est un premier coin d'un conteneur et la deuxième caractéristique de la charge est un deuxième coin du conteneur, dans lequel le premier coin du palonnier et le premier coin du conteneur sont des coins correspondants et le deuxième coin du palonnier et le deuxième coin du conteneur sont des coins correspondants.

**21.** Procédé selon la revendication 20, comprenant en outre :

la réception d'une troisième image d'une troisième caractéristique de la charge, dans lequel la troisième image est reçue d'une troisième caméra située sur un troisième coin du palonnier ;

la réception d'une quatrième image d'une quatrième caractéristique de la charge, dans lequel la quatrième image est reçue d'une quatrième caméra située sur le quatrième coin du palonnier ; dans lequel le troisième coin et le quatrième coin sont des coins différents du premier coin et du deuxième coin ; et dans lequel la troisième caractéristique de la charge est un troisième coin du conteneur et la quatrième caractéristique de la charge est un quatrième coin du conteneur, dans lequel le troisième coin du palonnier et le troisième coin du conteneur sont des coins correspondants et le quatrième coin du palonnier et le quatrième coin du conteneur sont des coins correspondants ; et

l'appareil comprend en outre des moyens pour

déterminer des coordonnées de plan d'image des troisième et quatrième caractéristiques de la charge sur la base de la troisième image et de la quatrième image ;

déterminer une autre opération par paire entre les coordonnées de plan d'image de la troisième caractéristique et les coordonnées de plan d'image de la quatrième caractéristique, dans lequel l'opérateur par paire de l'opération par paire présente un comportement monotone ou monotone par morceaux ;

déterminer un ou plusieurs candidats à l'action sur la base des opérations par paire.

**22.** Support lisible par ordinateur comprenant des instructions de programme qui, lorsqu'elles sont exécutées par au moins un processeur, amènent un appareil à effectuer au moins :

la réception d'une première image d'une première caractéristique d'une charge ;

la réception d'une deuxième image d'une deuxième caractéristique de la charge ;

la détermination de coordonnées de plan d'image des caractéristiques de la charge sur la base de la première image et de la deuxième image ;

**caractérisé en ce que** les instructions comprennent en outre les étapes consistant à

déterminer une opération par paire entre les coordonnées du plan d'image de la première caractéristique et les coordonnées du plan d'image de la deuxième caractéristique, dans lequel un opérateur par paire de l'opération par paire présente un comportement monotone ou monotone par morceaux ;

déterminer un ou plusieurs candidats à l'action sur la base de l'opération par paire ;

évaluer les un ou plusieurs candidats à l'action à l'aide d'un support intermédiaire contenant des informations d'expérience historique dans un horizon temporel fini pour obtenir un ou plusieurs coûts et/ou une ou plusieurs récompenses pour les un ou plusieurs candidats à l'action ;

déterminer une action de commande sur la base du ou des coûts et/ou de la ou des récompenses des candidats à l'action, dans lequel l'action de commande amène un palonnier à se déplacer par rapport à la charge.

**23.** Support de stockage lisible par ordinateur selon la revendication 22, comprenant des instructions de programme qui, lorsqu'elles sont exécutées par au moins un processeur, amènent un appareil à réaliser au moins le procédé selon l'une quelconque des revendications 13 à 21.

Fig. 1

Fig. 2

300

```
┌─────────────────────────────────────────────────────┐
│  ┌─────────────────────────────────────────────────┐ │
│  │ receiving a first image of a first feature of a  │ │  ⟩ 310
│  │ load                                             │ │
│  └─────────────────────────────────────────────────┘ │
│                        ↓                              │
│  ┌─────────────────────────────────────────────────┐ │
│  │ receiving a second image of a second feature of  │ │  ⟩ 320
│  │ the load                                         │ │
│  └─────────────────────────────────────────────────┘ │
│                        ↓                              │
│  ┌─────────────────────────────────────────────────┐ │
│  │ determining image plane coordinates of the       │ │  ⟩
│  │ features of the load based on the first image and │ │    330
│  │ the second image                                 │ │
│  └─────────────────────────────────────────────────┘ │
│                        ↓                              │
│  ┌─────────────────────────────────────────────────┐ │
│  │ determining one or more action candidates based  │ │  ⟩
│  │ on the image plane coordinates                   │ │    340
│  └─────────────────────────────────────────────────┘ │
│                        ↓                              │
│  ┌─────────────────────────────────────────────────┐ │
│  │ evaluating the one or more action candidates using│ │  ⟩
│  │ an intermediate medium embodying historical      │ │    350
│  │ experience information within a finite time      │ │
│  │ horizon                                          │ │
│  └─────────────────────────────────────────────────┘ │
│                        ↓                              │
│  ┌─────────────────────────────────────────────────┐ │
│  │ choosing a control action based on the evaluation,│ │  ⟩
│  │ wherein the control action causes a spreader to  │ │    360
│  │ move with respect to the load                    │ │
│  │                                                  │ │
│  └─────────────────────────────────────────────────┘ │
└─────────────────────────────────────────────────────┘
```

Fig. 3

400    102

401

403

Z

Y

410

411

413    412

0    X

104

0    X    450

Y

460

0    X

Y

461    451

0    X

Y

463

0    X

Y

462    452

453

Fig. 4

Fig. 5

600

602

Real-time process unit

608
Actuators

606
Sensors

610
Real-time Fieldbus

630
On-board process unit

Private Network

604
AI Process Unit

612
LAN

614
Communication HW interfaces

616
Multicast Cameras Network

620
Camera

622
Camera

624
Camera

626
Camera

Fig. 6

700

710

730

720

UI

Processor

Memory

740

Communication
means

Fig. 7

800

x-offset

804

Number of times the controller creates actions

802

Fig. 8

Fig. 9

1000

1004

Number of times the controller creates actions

1002

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2796402 A1